# EUROPÄISCHE PATENTANMELDUNG

(11) **EP 1 704 831 A1**
(43) Veröffentlichungstag der Anmeldung: **27.09.2006**
(21) Anmeldenummer: 06005120.8
(22) Anmeldetag: 14.03.2006
(51) Int. Cl.: A61C 13/10, A61C 11/00

(54) **Aufstellhilfe für das Aufstellen von Zähnen**

(30) Priorität: 21.03.2005 DE 102005013459
(71) Anmelder: Heraeus Kulzer GmbH, 63450 Hanau (DE)
(72) Erfinder: Savic, Novica, 63691 Ranstadt (DE); Mrotzek, Olaf, 88142 Wasserburg (DE); Ehret, Dieter, 89174 Altheim-Alb (DE)
(74) Vertreter: Kühn, Hans-Christian

(57) **Zusammenfassung**

Die Erfindung betrifft eine Aufstellhilfe für das Aufstellen von Zähnen, insbesondere bei der Prothesenherstellung, mit einer Zahnpositionierungslehre mit beweglichen Zahnblöcken, und besteht darin, dass die Zahnblöcke Zahnimpressionen zur Aufnahme von Zähnen aufweisen.

## Beschreibung

Die Erfindung betrifft eine Aufstellhilfe für das Aufstellen von Zähnen, insbesondere bei der Prothesenherstellung, mit einer Zahnpositionierungslehre mit beweglichen Zahnblöcken.

Derartige Aufstellhilfen sind beispielsweise aus DE 86 17 182 U1 bekannt. Diese Aufstellhilfe besteht im wesentlichen aus einem an einem Artikulator relativ zu einem Unterkiefermodell fixierbaren Halter und zwei in einer Ebene verschiebbaren und verschwenkbaren Einsätzen, mit deren Hilfe eine Zahnaufstellung der Seitenzähne einer Unterkieferprothese ermöglicht wird. Artikulatoren werden des weiteren beispielsweise in DE 197 26 725 A1 oder DE 199 56 876 A1 beschrieben. In DE 197 26 725 A1 ist zusätzlich die Anordnung einer einfachen Aufstellhilfe in einem Artikulator beschrieben.

Die Anfertigung von Prothesen, insbesondere von Totalprothesen, erfordert einen hohen Zeitaufwand, insbesondere zur korrekten Positionierung der einzelnen Zähne. Mit den bekannten Vorrichtungen wird lediglich die Ausrichtung der Zähne bezüglich einer Ebene vereinfacht, jede andere Positionierung muss aufwendig manuell vorgenommen werden.

Aufgabe der vorliegenden Erfindung ist es, die Aufstellung der Zähne einer Prothese zu vereinfachen.

Diese Aufgabe wird durch die Merkmale des Hauptanspruchs gelöst. Vorteilhafte Ausgestaltungen sind in den Unteransprüchen angegeben.

Dadurch, dass die Zahnblöcke Zahnimpressionen zur Aufnahme von Zähnen aufweisen, sichert die Aufstellhilfe die exakte Positionierung von künstlichen Prothesenzähnen in Verzahnung ohne Einschränkung der individuellen Funktionsmuster des Patienten bei einer gleichzeitigen Verkürzung des Arbeitsaufwandes gegenüber den bekannten Verfahren um bis zu 80 %. Zweckmäßig ist es, dass die Zahnimpressionen an Ober- und Unterseite der Zahnblöcke angeordnet sind. Vorteilhaft sind die Zahnblöcke als Seitenzahnblöcke zur Aufnahme von Seitenzähnen ausgebildet. Mit einer solchen Seitenzahnpositionierungslehre sind alle anerkannten ldealokklusionen, das heißt balancierte Okklusionen, Schutzokklusionen, lingualisierte Okklusionen und gruppengeführte Okklusionen durch entsprechend vorgefertigte und austauschbare Zahnblöcke (Seitenzahnblöcke) auf einfache Weise realisierbar, ohne dass fundierte Vorkenntnisse erforderlich wären. Die Zahnimpressionen, die jeweils den kompletten Oberkiefer-/Unterkiefer-Seitenzahnblock fixieren, dienen der anatomisch richtigen Positionierung künstlicher Seitenzähne. Dabei lässt sich die Zahnpositionierungslehre auf der Kauebene frei nach allen Seiten in die patientenanalog anatomisch richtige Position verschieben und dort fixieren. Dazu ist es zweckmäßig, dass die Seitenzahnblöcke schwenkbar und/oder verschiebbar angeordnet sind. Des weiteren sind die Zahnblöcke sinnvollerweise entfernbar an der Zahnpositionierungslehre angeordnet.

Die Aufstellhilfe kann an einem Artikulator dergestalt angeordnet werden, dass an der Zahnpositionierungslehre ein Grundgerät angeordnet ist, welches Anschlüsse zur Verbindung mit dem Artikulator aufweist. Das Grundgerät ist insbesondere über ein Verbindungsmodul, vorzugsweise einen Steckanschluss mit der Zahnpositionierungslehre verbunden.

Zweckmäßig ist es, dass in den Zahnblöcken eine Positionierungsöffnung zwischen Ober- und Unterseite vorgesehen ist. Durch eine solche Öffnung (ein Loch) in den Zahnblöcken, insbesondere auf der Spitze des mesiopalatinalen Höckers des ersten Oberkiefermolaren wird deren exakte räumliche Positionierung mit Hilfe eines Laserpointers bestimmt. Die statische Positionierung über dem Kieferkamm erfolgt durch Markierung an der mesialen und distalen Begrenzung der Zahnblöcke.

Wichtig ist es, dass an der Zahnpositionierungslehre ein Frontzahntisch, vorzugsweise entfernbar, angeordnet ist. Der Frontzahntisch dient der Ausrichtung der Oberkieferfrontzähne an die Horizontalebene. Um die Frontzahnstellungen nach ästhetischen und phonetischen Gesichtspunkten sicherstellen zu können, ist der Frontzahntisch abnehmbar und insbesondere ohne Impressionen ausgeführt. Die Aufstellhilfe weist vorteilhafterweise eine Einrichtung zur Höhenjustierung und Stabilisierung der horizontalen Lage auf. Ihre Einrichtung, die einen Trägerstift, beispielsweise mittels eines Gewindes, mit einem Stützdorn verbindet, kann an dem Artikulator befestigt sein.

Die Zahnpositionierungslehre weist vorteilhafterweise eine Schwenkachse zum gemeinsamen Verschwenken der Zahnblöcke auf, die es ermöglicht, beispielsweise mittels eines Scharniers realisierte Schwenkachse, dass die Zahnpositionierungslehre nach oben geklappt werden kann. Damit wird gewährleistet, dass die Unterkiefer-Seitenzähne frei in den Impressionen positioniert werden können und ein eventuelles Ausgleichen der Zahnbasen an das Kieferprofil möglich ist. Die Einrichtung zur Höhenjustierung kann dabei das exakte Zurücksetzen der Zahnpositionierungslehre auf die Kauebene sicherstellen.

Aufgrund der Vielzahl von Artikulatoren ist es erforderlich, das Grundgerät, insbesondere seine Anschlüsse, für den Artikulator an diesen anzupassen bzw. für jeden Artikulatortyp ein entsprechendes Grundgerät anzufertigen. Auch ein Einsatz von Adaptern zwischen Grundgerät und Artikulator ist möglich. In jedem Fall muss das Grundgerät im Artikulator fixiert werden. Dazu werden in der Regel sogenannte Condylen (Scharnierachsen) verwendet.

Durch das Austauschen der Zahnblöcke lässt sich praktisch jede Art der Verzahnung herbeiführen. Die Impressionen sind zweckmäßigerweise mehr oder weniger exakt an auf dem Markt befindliche Prothesenzähne angepasst. Durch die Austauschbarkeit der Zahnblöcke können unterschiedliche Zähne verwendet und kann damit den individuell notwendigen Anpassungen Rechnung getragen werden.

Ein Ausführungsbeispiel der Erfindung wird nachfolgend anhand einer Zeichnung beschrieben. In der Zeichnung zeigt:
- Figur 1: ein Grundgerät
- Figur 2: eine Zahnpositionierungslehre und
- Figur 3: eine Einrichtung zur Höhenjustierung.

Die drei Figuren sind ihrem Sachzusammenhang entsprechend untereinander angeordnet. Da die grundsätzliche Anordnung einer Aufstellhilfe in einem Artikulator beispielsweise aus dem eingangs beschriebenen Stand der Technik bekannt ist, wird insoweit auf diesen Stand der Technik Bezug genommen und die Anordnung im Artikulator aus Gründen der Übersichtlichkeit nicht näher erläutert.

Das Grundgerät weist an der linken und an der rechten Seite jeweils eine Condylenaufnahme 20 auf, in der jeweils eine Condyle 19 gelagert ist. Die Lage der Condylen 19 wird mittels Distanzhaltern 18 an den konkreten Artikulator angepasst. Dabei können sie um etwa 2 bis 3 mm auf jeder Seite angehoben werden. Um den gleichen Betrag muss die Einrichtung zur Höhenjustierung angehoben werden. Mittels Fixierungsschrauben 17 erfolgt eine horizontale Ausrichtung des Grundgerätes im Artikulator und gegebenenfalls seine Fixierung.

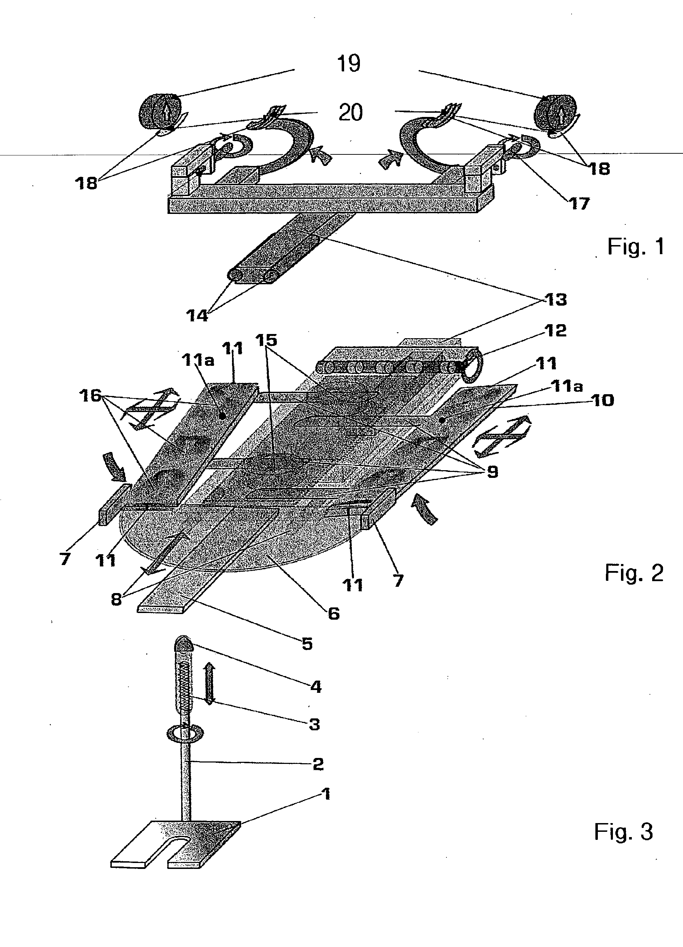

An dem Grundgerät wird mittels einer Steckverbindung 13 die Zahnpositionierungslehre (Seitenzahnpositionierungslehre) angeordnet und mittels Fixierungsstiften 14 fixiert. Die in Figur 2 dargestellte Zahnpositionierungslehre weist links und rechts je einen Seitenzahnblock 10 auf, der mit Hilfe von beweglichen Trägerarmen 9 in einer Ebene verschoben und verschwenkt werden können. Die Positionierungsschrauben 15 dienen der Fixierung der korrekten Position der Seitenzahnblöcke 10.

Die Seitenzahnblöcke 10 weisen an ihrer Ober- und Unterseite Zahnimpressionen 16 für Oberkiefer- und Unterkieferseitenzähne auf sowie jeweils einen Anschlag 7 für den jeweiligen Eckzahn. Der Lochkontrollpunkt 11 a ist an der der Spitze des mesiopalatinalen Höckers des ersten Oberkiefermolaren entsprechenden Stelle des jeweiligen Seitenzahnblockes 10 angeordnet. Die Positionierung dieses Oberkiefermolaren wird mit Hilfe eines Laserpointers bestimmt. Die Seitenzahnblöcke 10 tragen darüber hinaus weitere Markierungspunkt 11 an der mesialen und der distalen Begrenzung der Seitenzahnblöcke 10, die der exakten Positionierung über dem Kieferkamm dienen.

Mittels der Drehachse 12 lässt sich die Zahnpositionierungslehre nach oben klappen, um die Unterkieferseitenzähne in den Impressionen zu positionieren. Der Frontzahntisch 6 ist abnehmbar angeordnet und mit Hilfe von Fixierungsstiften 8 fixiert und lagejustiert. Er dient der Ausrichtung der Oberkieferfrontzähne an die Horizontalebene. Des weiteren weist die Zahnpositionierungslehre einen Stützarm 5 auf, an dem die Gewindehülse 4 angreift. Der Stützarm 5 und damit die Zahnpositionierungslehre werden mit Hilfe der Gewindehülse 4 in ihrer horizontalen Lage justiert. Dazu kann die Gewindehülse 4 mittels des Gewindes 3 des Stützdornes 2 höhenverstellt werden. Der Stützdorn 2 ist an einer Grundplatte 1 gehaltert, die wiederum am Artikulator befestigt wird.

## Patentansprüche

1. Aufstellhilfe für das Aufstellen von Zähnen, insbesondere bei der Prothesenherstellung, mit einer Zahnpositionierungslehre mit beweglichen Zahnblöcken, **dadurch gekennzeichnet, dass** die Zahnblöcke Zahnimpressionen zur Aufnahme von Zähnen aufweisen.

2. Aufstellhilfe nach Anspruch 1, **dadurch gekennzeichnet, dass** die Zahnimpressionen an Ober- und Unterseite der Zahnblöcke angeordnet sind.

3. Aufstellhilfe nach Anspruch 1 oder 2, **dadurch gekennzeichnet, dass** die Zahnblöcke als Seitenzahnblöcke zur Aufnahme von Seitenzähnen ausgebildet sind.

4. Aufstellhilfe nach einer der Ansprüche 1 bis 3, **dadurch gekennzeichnet, dass** die Zahnblöcke schwenkbar und/oder verschiebbar angeordnet sind.

5. Aufstellhilfe nach einer der Ansprüche 1 bis 4, **dadurch gekennzeichnet, dass** die Zahnblöcke entfernbar an der Zahnpositionierungslehre angeordnet sind.

6. Aufstellhilfe nach einer der Ansprüche 1 bis 5, **dadurch gekennzeichnet, dass** an der Zahnpositionierungslehre ein Grundgerät angeordnet ist, welches Anschlüsse zur Verbindung mit einem Artikulator aufweist.

7. Aufstellhilfe nach Anspruch 6, **dadurch gekennzeichnet, dass** das Grundgerät über ein Verbindungsmodul, vorzugsweise einen Steckanschluß, mit der Zahnpositionierungslehre verbunden ist.

8. Aufstellhilfe nach einer der Ansprüche 1 bis 7, **dadurch gekennzeichnet, dass** in den Zahnblöcken eine Positionierungsöffnung zwischen Ober- und Unterseite vorgesehen ist.

9. Aufstellhilfe nach einer der Ansprüche 1 bis 8, **dadurch gekennzeichnet, dass** an der Zahnpositionierungslehre ein Frontzahntisch, vorzugsweise entfernbar, angeordnet ist.

10. Aufstellhilfe nach einer der Ansprüche 1 bis 9, **dadurch gekennzeichnet, dass** sie eine Einrichtung zur Höhenjustierung aufweist.

11. Aufstellhilfe nach einer der Ansprüche 1 bis 10, **dadurch gekennzeichnet, dass** die Zahnpositionierungslehre eine Schwenkachse zum gemeinsamen Verschwenken der Zahnblöcke aufweist.
